# EUROPÄISCHE PATENTSCHRIFT

(11) **EP 1 693 473 B1**
(45) Veröffentlichungstag und Bekanntmachung des Hinweises auf die Patenterteilung: **07.05.2008**
(21) Anmeldenummer: 05003583.1
(22) Anmeldetag: 18.02.2005
(51) Int. Cl.: C22C 19/00, C23C 10/18, C23C 10/00

(54) **MCrAIX-Legierung, Schutzschicht aus MCrAIX-Legierung und Verfahren zur Herstellung**
MCrAlX-alloy, protective coating made thereof and method for its production
Alliage-MCrAlX, couche protectrice en cet alliage et son procédé de fabrication

(43) Veröffentlichungstag der Anmeldung: 23.08.2006
(73) Patentinhaber: SIEMENS AKTIENGESELLSCHAFT, 80333 München (DE)
(72) Erfinder: Schütze, Michael Prof., 63741 Aschaffenburg (DE); Stamm, Werner Dr., 45481 Mülheim an der Ruhr (DE)

(56) Entgegenhaltungen:
- EP-A- 1 319 730
- US-B1- 6 555 179

## Beschreibung

Die Erfindung betrifft eine Legierung des Typs MCrAlX gemäß Anspruch 1, eine Schutzschicht gemäß Anspruch 4 und Verfahren zur Herstellung der Schutzschicht gemäß den Ansprüchen 8 bis 11.

Wärmedämmschichtsysteme werden größtenteils auf Nickel- oder Kobaltbasissystemen als Grundwerkstoff eingesetzt, wobei zur Verbesserung der mechanischen Eigenschaften der Anteil der y'-Phase durch Zusätze von Aluminium und Titan erhöht wird. Da Titan jedoch einen sehr hohen Diffusionskoeffizienten bei den Einsatztemperaturen aufweist, diffundiert Titan vom Grundwerkstoff in eine Haftvermittlerschicht des Typs MCrAlX des Schichtsystems und wird dort in die thermisch gewachsene Aluminiumoxid-Schicht (TGO) eingebaut, sodass sich auf der Haftvermittlungsschicht Titan-Spinelle bilden, die sich sehr ungünstig auf die Haftung einer darüber liegenden Keramikschicht auswirken.
Oft wird eine Platinierung der MCrAlX-Haftvermittlerschicht durchgeführt, um diese Diffusion zu verhindern, deren Kosten aber sehr hoch sind.

Die EP 0 489 659 B1 offenbart ein Verfahren zur Behandlung von Metallen, bei dem metallische Halogenide als Schicht aufgebracht werden.

Es ist daher Aufgabe der Erfindung oben genanntes Problem zu überwinden.

Die Aufgabe wird gelöst durch eine MCrAlX-Legierung gemäß Anspruch 1, eine Schutzschicht gemäß Anspruch 4 und Verfahren zur Herstellung gemäß Ansprüchen 8 bis 11.

In den Unteransprüchen sind weitere vorteilhafte Maßnahmen aufgelistet, die beliebig miteinander in vorteilhafter Art und Weise miteinander kombiniert werden können.

Die Erfindung besteht darin, dass Elemente zumindest eines Halogens (Fluor [F], Chlor [Cl], Brom [Br], Jod [I]) in eine Schicht aus einer MCrAlX-Legierung eingebracht sind. Diese Halogene fangen durch den niedrigen Dampfdruck u. a. die Titanatome ein, sodass diese im Metallgitter immobilisiert sind und praktisch keine Titanatome mehr die Oberfläche einer Schicht aus einer MCrAlX-Legierung erreichen und dort Spinelle bilden können.
Zusätzlich wird auch die Aluminiumaktivität in der Weise erhöht, dass sich eine homogene α-Aluminiumoxidschicht ausbildet. Die Anwendung führt somit auch zu einer deutlichen Erhöhung der Oxidationsschutzwirkung von Schichten auf MCrAlX-Basis.

Es zeigen
- Figur 1: ein Schichtsystem,
- Figur 2: eine Turbinenschaufel,
- Figur 3: eine Brennkammer,
- Figur 4: eine Gasturbine und
- Figur 5: eine Dampfturbine.

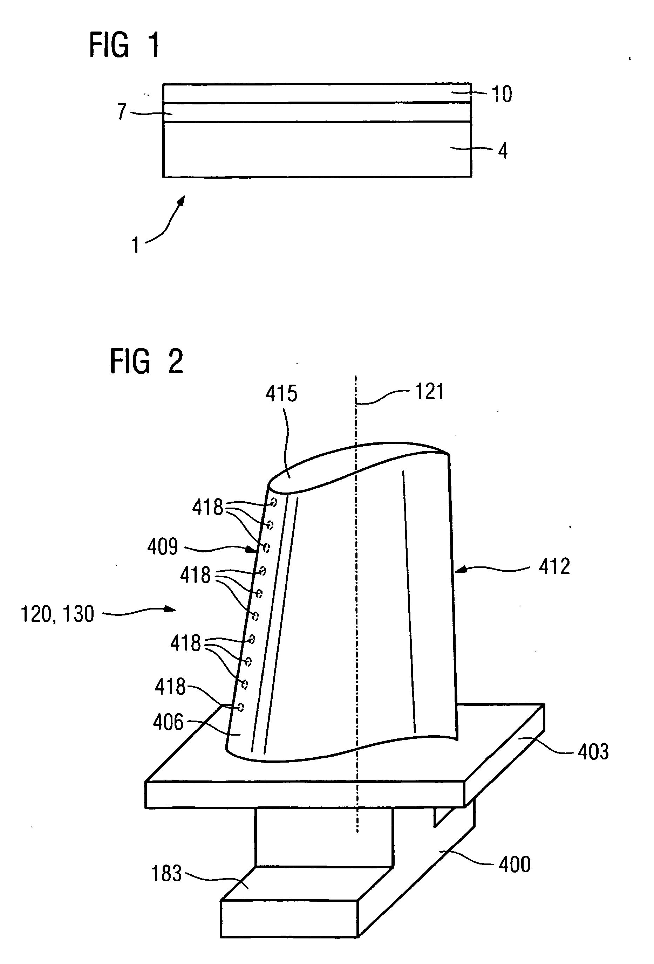

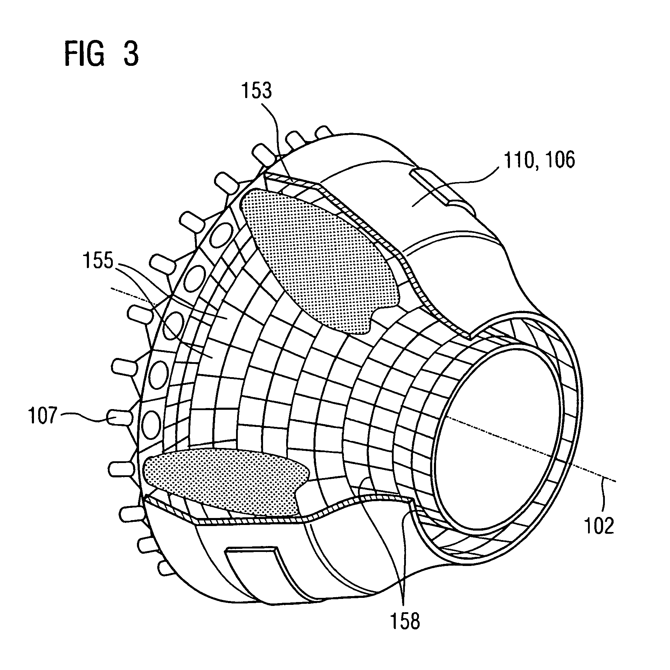

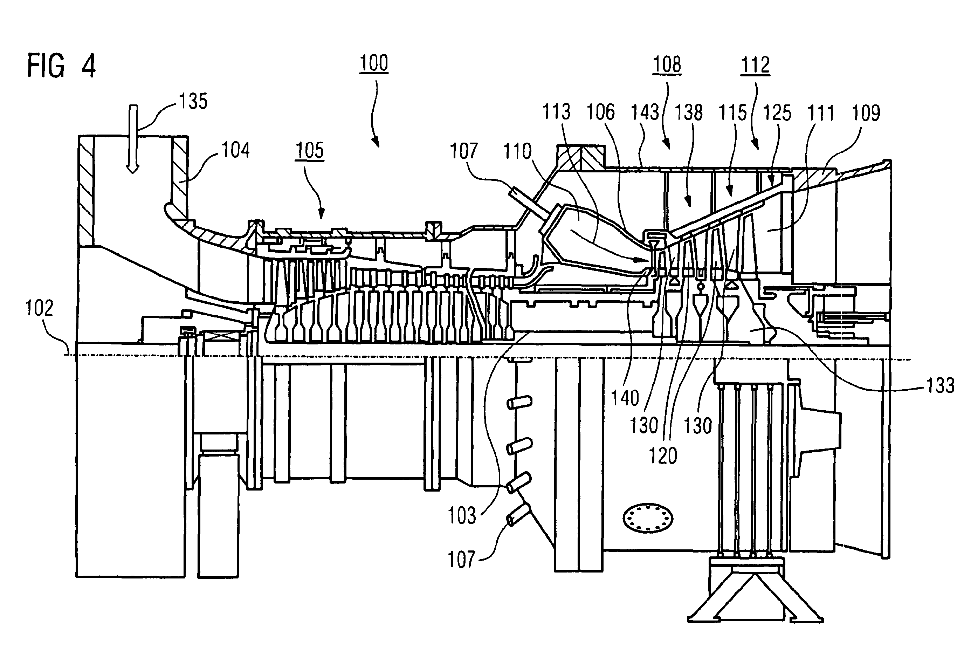

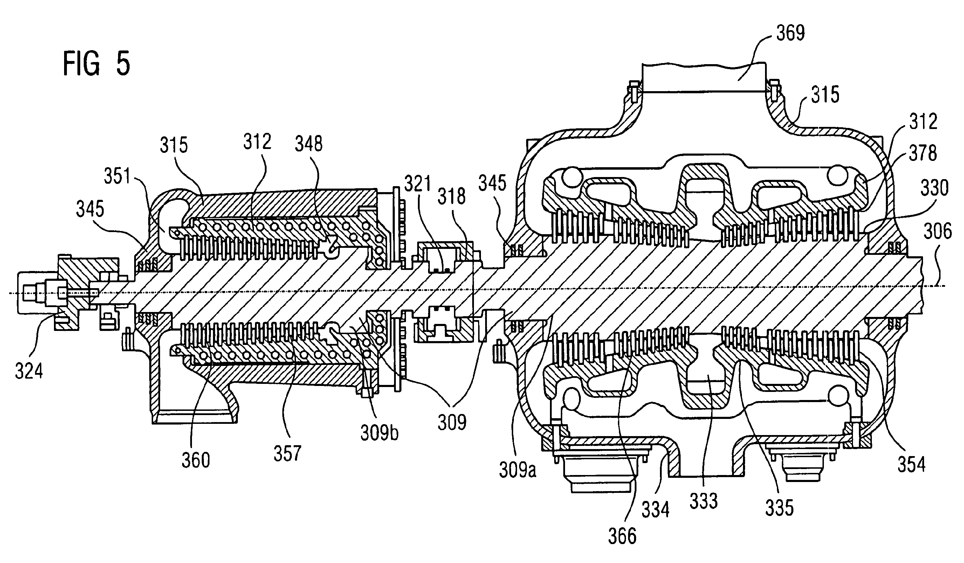

Figur 1 zeigt ein Schichtsystem 1.
Das Schichtsystem 1 besteht aus einem Substrat 4, einer Schutzschicht 7 als Haftvermittlungsschicht und/oder zum Korrosionsschutz auf der Basis der erfindungsgemäßen MCrAlX-Legierung.
Zusätzlich kann, aber muss nicht, eine keramische Schicht 10 auf der Schutzschicht 7 angeordnet sein, die zusätzlich zur Wärmedämmung dient.
Solche Schichtsysteme 1 werden beispielsweise für Bauteile von Turbinen, beispielsweise von Dampf- oder Gasturbinen 100 (Fig. 4), auf Turbinenschaufeln 120, 130 (Fig. 2), Hitzeschildelementen 155 (Fig. 3), Dampfeinströmbereiche 333 (Fig. 5) verwendet.

M steht dabei für zumindest ein Element der Gruppe Eisen (Fe) und/oder Nickel (Ni) und/oder Kobalt (Co).
X steht zumindest für Yttrium (Y), Silizium (Si), Hafnium (Hf) oder zumindest ein anderes Element aus der Gruppe der Seltenen Erden.
Weitere Bestandteile in der MCrAlX-Legierung sind möglich, die zur Verbesserung von mechanischen und/oder korrosiven Eigenschaften dienen.
Beispiele für eine MCrAlX-Legierung sind in der US 5,401,307, US 5,582,635, US 5,599,385, EP 0 486 489, WO 91/02108, US 5,154,885, US 5,273,712, US 5,268,238, EP 0 412 397, EP 0 786 017, WO 96/12049, US 5,993,980 beschrieben.

Die MCrAlX-Schicht besteht beispielsweise aus
25 - 40wt%, insbesondere 29 - 31wt% Nickel,
27 - 32wt%, insbesondere 27 - 29wt% Chrom,
7 - 9wt%, insbesondere 7 - 8wt% Aluminium,
0,3 - 1wt%, insbesondere 0,5 - 0,7wt% X, insbesondere Y,
0,3 - 2wt%, insbesondere 0,3 - 0,7wt% Silizium,
ggf. mit einer Zugabe von Rhenium (Re): max: 3 wt% und
einem Mindestgehalt von 5wt% Kobalt, der auch den Rest bildet.
Ebenso können die Halogene in einer rheniumhaltigen MCrAlX-Legierung vorhanden sein.

Eine weitere vorteilhafte MCrAlX-Legierung besteht aus
20 - 50wt%, insbesondere 20 - 22wt% Chrom,
0 - 15wt%, insbesondere 10,5 - 11,5wt% Aluminium,
0,3 - 2wt%, insbesondere 0,3 - 0,5wt% X, insbesondere Y,
1 - 20wt%, insbesondere 1,5 - 2,5wt% Rhenium,
ggf. Zugabe von Silizium: max. 2wt%,
insbesondere 11 - 13 wt% Kobalt.
Der Rest kann aus Nickel bestehen. Ebenso kann der Rest aus Kobalt bestehen oder kann die Legierung auf Nickel/Kobalt basieren.

Eine weitere MCrAlX-Legierung besteht aus
0 - 30wt%, insbesondere 24 - 26wt% Kobalt,
15 - 26wt%, insbesondere 16 - 18wt% Chrom,
9 - 15wt%, insbesondere 9,5 - 11wt% Aluminium,
0,3 - 2wt%, insbesondere 0,3 - 0,5wt% X, insbesondere Y,
1 - 15wt%, insbesondere 1,0 - 1,8wt% Rhenium,
und optionale Zugabe von Silizium (max: 2wt%) und
Rest Nickel.

Erfindungsgemäß sind in diese Schutzschicht 7 zumindest in einem Teilbereich der Schutzschicht 7 insbesondere nahe dem Substrat 4 Halogene oder Halogenide eingebracht. Die Konzentration des zumindest einen Halogens kann also beispielsweise einen Gradienten aufweisen.

Die Halogene können auf verschiedene Art und Weise eingebracht werden.
1. Tauchprozess mit einer MCrAlX-Schicht in halogensalzhaltigen Lösungen bei Raumtemperatur und anschließender thermischer Behandlung (vorzugsweise 700°C - 1000°C);
2. Tauchprozess in halogenhaltigen organischen Flüssigkeiten und anschließender thermischer Behandlung, vorzugsweise bei Temperaturen von 700°C - 1000°C;
3. Aufbringen fester halogenhaltiger Salze auf eine MCrAlX-Schicht, z. B. durch einen Pulverpackprozess mit anschließender thermischer Behandlung (vorzugsweise 700°C - 1000°C);
4. Kühlung einer warmen MCrAlX-Schicht in halogenhaltigen Gasatmosphären;
5. Ionenimplantation von Halogenionen in eine MCrAlX-Schicht.

Ebenso kann beispielsweise auch eine Anlage des so genannten Fluoridionenreinigungsverfahrens (FIC) benutzt werden, um Halogene in die MCrAlX-Legierung einzubringen.

Weitere Einbringungsmöglichkeiten sind möglich

Dabei kann mit der MCrAlX-Schicht 7 mit den Halogenen eine Lösungsglühung (vorzugsweise 4h 1160°C) und/oder Ausscheidungswärmebehandlung (vorzugsweise 24h 840°C) in Abhängigkeit vom Material des Substrats 4 durchgeführt werden.

Ebenso können sich Halogenide, also Verbindungen aus Halogenen und einem weiteren Element (beispielsweise AlF₃, AlCl₃) in der Schutzschicht 7 bilden oder direkt bei der Herstellung der MCrAlX-Legierung erzeugt oder der MCrAlX-Schutzschicht 7 vor deren Aufbringung auf den zu schützenden Grundwerkstoff beigemengt werden.

Der Anteil der Halogene in der Legierung als Element oder als Bestandteil eines Halogenids beträgt mindestens 100ppm, vorzugsweise mindestens 200pm oder 300ppm und liegt bis maximal 5000ppm, insbesondere maximal 1000ppm oder 500ppm.

Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 erfindungsgemäße Schutzschichten 7 gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)) aufweisen. Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln 120, 130 sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

In Figur 5 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließenden Außengehäuses 315 auf.
Die Hochdruck-Teilturbine 300 ist beispielsweise in Topfbauart ausgeführt.
Die Mitteldruck-Teilturbine 303 ist zweiflutig ausgeführt.

Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

## Patentansprüche

1. MCrAlX-Legierung mit einem Halogen aus der Gruppe F, Cl, Br und I,
wobei M ein Element der Gruppe Eisen (Fe) und/oder Nickel (Ni) und/oder Kobalt (Co) und
X Yttrium (Y) und/oder Silizium (Si) und/oder Hafnium (Hf) oder ein Element der Seltenen Erden bedeutet,
wobei der Anteil der Halogene mindestens 100ppm und maximal 5000ppm beträgt.

2. MCrAIX-Legierung nach Anspruch 1,
**dadurch gekennzeichnet, dass**
das Halogen (F, Cl, Br, I) als Halogenverbindung (Halogenid) in der MCrAIX-Legierung vorliegt.

3. MCrAIX-Legierung nach Anspruch 1,
**dadurch gekennzeichnet, dass**
das Halogen (F, Cl, Br, I) eine Halogenverbindung (Halogenid) mit zumindest einem Bestandteil der MCrAlX-Legierung bildet.

4. Schutzschicht (7) bestehend aus einer MCrAlX-Legierung gemäß einem oder mehreren der Ansprüche 1 bis 3.

5. Schutzschicht nach Anspruch 4,
**dadurch gekennzeichnet,**
**dass** die Schutzschicht (7) auf einem Substrat (4) aus einer nickel- oder kobalt- oder eisenbasierten Superlegierung aufgebracht ist, und
**dass** insbesondere eine keramische Wärmedämmschicht (10) auf der Schutzschicht (7) aufgebracht ist.

6. Schutzschicht nach Anspruch 4 oder 5,
**dadurch gekennzeichnet, dass**
die Schutzschicht (7) für ein Bauteil einer Turbine, insbesondere einer Gas- (100) oder Dampfturbine (300, 303), insbesondere für eine Turbinenschaufel (120, 130) oder ein Brennkammerelement (155) verwendet wird.

7. Schutzschicht nach Anspruch 4, 5 oder 6,
**dadurch gekennzeichnet, dass**
die Konzentration der Halogene (F, Cl, Br, I) oder der Halogenide in der Schutzschicht (7) einen Konzentrationsgradienten aufweist und
die Konzentration insbesondere nahe des Substrats (4) am größten ist.

8. Verfahren zur Herstellung einer Schutzschicht (7) gemäß einem oder mehreren der Ansprüchen 4 bis 7,
**dadurch gekennzeichnet,**
**dass** eine Schicht aus einer MCrAlX-Legierung mittels eines Tauchprozesses in Verbindung mit zumindest einer halogensalzhaltigen Lösung und/oder halogenhaltigen organischen Flüssigkeiten in Verbindung gebracht wird und
**dass** durch eine anschließende thermische Behandlung das zumindest eine Halogen (F, Cl, Br, I) in die Schicht ein diffundiert.

9. Verfahren zur Herstellung einer Schutzschicht (7) gemäß einem oder mehreren der Ansprüche 4 bis 7,
**dadurch gekennzeichnet,**
**dass** halogenhaltige Salze,
insbesondere durch einen Pulverpackprozess,
auf eine Schicht aus einer MCrAlX-Legierung aufgebracht werden, und
**dass** durch eine anschließende thermische Behandlung das zumindest eine Halogen (F, Cl, Br, I) in die Schicht hinein diffundiert.

10. Verfahren zur Herstellung einer Schutzschicht (7) gemäß einem oder mehreren der Ansprüche 4 bis 7,
**dadurch gekennzeichnet, dass**
eine Schicht aus einer MCrAlX-Legierung erwärmt wird oder eine noch warme MCrAlX-Schicht direkt nach der Herstellung in einer halogenhaltigen Gasatmosphäre gekühlt wird, sodass zumindest ein Halogen (F, Cl, Br, I) in die Schicht hinein diffundiert.

11. Verfahren zur Herstellung einer Schutzschicht (7) gemäß einem oder mehreren der Ansprüche 4 bis 7,
**dadurch gekennzeichnet, dass**
Halogenionen (F, Cl, Br, I) mittels Ionenimplantation in eine Schicht aus einer MCrAlX-Legierung eingebracht werden.

12. Schutzschicht nach Anspruch 4 bis 7 und Verfahren nach Anspruch 8, 9, 10 oder 11,
**dadurch gekennzeichnet, dass**
zumindest eine Wärmebehandlung
insbesondere eine Lösungsglühung und/oder Ausscheidungsbehandlung
mit der mit Halogenen (F, Cl, Br, I) oder Halogeniden angereicherten MCrAlX-Schicht (7) und dem Schichtsystem (1) durchgeführt wird.

## Claims

1. MCrAlX alloy having a halogen selected from the group comprising F, CL, Br and I,
in which M denotes one element selected from the group consisting of iron (Fe) and/or nickel (Ni) and/or cobalt (Co), and
X denotes yttrium (Y) and/or silicon (Si) and/or hafnium (Hf) or one of the rare earth elements,
in which the amount of halogen is at least 1000 ppm and at most 5000 ppm.

2. MCrAlX alloy according to claim 1,
**characterized in that**
the halogen (F, Cl, Br, I) is present as a halogen compound (halide) in the MCrAlX alloy.

3. MCrAlX alloy according to claim 1,
**characterized in that**
the halogen (F, Cl, Br, I) forms a halogen compound (halide) with at least one constituent of the MCrAlX alloy.

4. Protective layer (7) consisting of the MCrAlX alloy according to one or more of claims 1 to 3.

5. Protective layer according to claim 4,
**characterized**
**in that** the protective layer (7) is applied to a substrate (4) of a nickel-base or cobalt-base or iron-base superalloy, and
**in that** in particular a ceramic thermal barrier coating (10) is applied to the protective layer (7).

6. Protective layer according to claim 4 or 5,
**characterized in that**
the protective layer (7) is used for a component of a turbine, in particular a gas turbine (100) or steam turbine (300, 303), in particular for a turbine blade or vane (120, 130) or a combustion chamber element (155).

7. Protective layer according to claim 4, 5 or 6,
**characterized in that**
the concentration of the halogens (F, Cl, Br, I) or the halides in the protective layer (7) has a concentration gradient, and the concentration is greatest in particular near the substrate (4).

8. Process for producing the protective layer (7) according to one or more of claims 4 to 7,
**characterized**
**in that** a layer of an MCrAlX alloy is brought into contact with at least one halogen-salt-containing solution and/or halogen-containing organic liquids by means of a dip process, and
**in that** the at least one halogen (F, C1, Br, I) is made to diffuse into the layer by means of a subsequent heat treatment.

9. Process for producing the protective layer (7) according to one or more of claims 4 to 7,
**characterized**
**in that** halogen-containing salts are applied to a layer of an MCrAlX alloy, in particular by a powder pack process, and
**in that** the at least one halogen (F, Cl, Br, I) is made to diffuse into the layer by means of a subsequent heat treatment.

10. Process for producing the protective layer (7) according to one or more of claims 4 to 7,
**characterized in that**
a layer of an MCrAlX alloy is heated or a still-warm MCrAlX layer is cooled in a halogen-containing gas atmosphere immediately after it has been produced, so that at least one halogen (F, Cl, Br, I) diffuses into the layer.

11. Process for producing the protective layer (7) according to one or more of claims 4 to 7,
**characterized in that**
halogen ions (F, Cl, Br, I) are introduced into a layer of an MCrAlX alloy by means of ion implantation.

12. Protective layer according to claims 4 to 7 and the process according to claim 8, 9, 10 or 11,
**characterized in that**
at least one heat treatment,
in particular a solution anneal and/or precipitation treatment is carried out with the MCrAlX layer (7) enriched with halogens (F, Cl, Br, I) or halides and the layer system (1).

## Revendications

1. Alliage MCrAlX ayant un halogène du groupe F, Cl, Br et I,
dans lequel M signifie un élément du groupe fer (Fe) et/ou nickel (Ni) et/ou cobalt (Co), et
X signifie l'yttrium (Y) et/ou le silicium (Si) et/ou l'hafnium (Hf) ou un élément des terres rares,
la proportion des halogènes représentant au moins 100 ppm et au maximum 5 000 ppm.

2. Alliage MCrAlX suivant la revendication 1,
**caractérisé en ce que**
l'halogène (F, Cl, Br, I) se présente sous la forme d'un composé halogéné (halogénure) dans l'alliage MCrAlX.

3. Alliage MCrAlX suivant la revendication 1,
**caractérisé en ce que**
l'halogène (F, Cl, Br, I) forme un composé halogéné (halogénure) avec au moins un constituant de l'alliage MCrAlX.

4. Couche (7) de protection constituée d'un alliage MCrAlX suivant l'une ou plusieurs des revendications 1 à 3.

5. Couche de protection suivant la revendication 4,
**caractérisée**
**en ce que** la couche (7) de protection est déposée sur un substrat (4) en un superalliage à base de nickel ou de cobalt ou de fer, et
**en ce qu'**il est déposé notamment une couche (10) calorifuge en céramique sur la couche (7) de protection.

6. Couche de protection suivant la revendication 4 ou 5,
**caractérisée en ce que**
la couche (7) de protection est utilisée pour un élément d'une turbine, notamment d'une turbine (100) à gaz ou d'une turbine (300, 303) à vapeur, notamment pour une aube (120, 130) de turbine ou pour un élément (155) d'une chambre de combustion.

7. Couche de protection suivant la revendication 4, 5 ou 6,
**caractérisée en ce que**
la concentration des halogènes (F, Cl, Br, I) ou des halogénures dans la couche (7) de protection a un gradient de concentration, et
la concentration est la plus grande, notamment à proximité du substrat (4).

8. Procédé de production d'une couche (7) de protection suivant l'une ou plusieurs des revendications 4 à 7,
**caractérisé**
**en ce que** l'on met une couche en un alliage MCrAlX au moyen d'une opération d'immersion en liaison avec au moins une solution contenant un sel d'halogène et/ou en liaison avec des liquides organiques halogénés, et
**en ce que**, par un traitement thermique ultérieur, on fait diffuser le au moins un halogène (F, Cl, Br, I) dans la couche.

9. Procédé de production d'une couche (7) de protection suivant l'une ou plusieurs des revendications 4 à 7,
**caractérisé**
**en ce que** l'on dépose un sel halogéné,
notamment par un procédé de poudre pack,
sur une couche en un alliage MCrAlX, et
**en ce que**, par un traitement thermique ultérieur, on fait diffuser au moins un halogène (F, Cl, Br, I) dans la couche.

10. Procédé de production d'une couche (7) de protection suivant l'une ou plusieurs des revendications 4 à 7,
**caractérisé en ce que**
on réchauffe une couche en un alliage MCrAlX ou on refroidit une couche MCrAlX encore tiède immédiatement après la production dans une atmosphère gazeuse halogénée de manière à ce qu'au moins un halogène (F, Cl, Br, I) diffuse dans la couche.

11. Procédé de production d'une couche (7) de protection suivant l'une ou plusieurs des revendications 4 à 7,
**caractérisé en ce que**
on introduit des ions halogènes (F, Cl, Br, I) au moyen d'une implantation d'ions dans une couche en un alliage MCrAlX.

12. Couche de protection suivant la revendication 4 à 7 et procédé suivant la revendication 8, 9, 10 ou 11,
**caractérisé en ce que**
on effectue au moins un traitement thermique,
notamment un recuit de mise en solution et/ou un traitement de précipitation,
avec le système (1) stratifié et avec la couche (7) de MCrAlX enrichi en halogènes (F, Cl, Br, I) ou en halogénures.
